# EUROPEAN PATENT APPLICATION

(11) **EP 2 885 964 A1**
(43) Date of publication of application: **24.06.2015**
(21) Application number: 15151757.0
(22) Date of filing: 28.12.2012
(51) Int. Cl.: A01G 9/02, A01G 9/16

(54) **Plant culture box assembly**

(30) Priority: 07.03.2012 TW 101107744
(62) Divisional of application: 12199562.5
(71) Applicant: Green Culture Biotechnology Co., Ltd., 435 Taichung City (TW)
(72) Inventor: Ho, Hung-Ming, 435 Taichung City (TW)
(74) Representative: Becker Kurig Straus

(57) **Abstract**

A plant culture box assembly (10) having a box (20) and an upper cover (30). The box (20) includes a bottom portion (21), a first peripheral wall (22), and a fastening portion (23). The first peripheral wall (22) is connected with a peripheral edge of the bottom portion (21), so that an opening (29) is formed between the first peripheral wall (22) and the bottom portion (21). The fastening portion (23) is annularly formed at an external side of the first peripheral wall (22). The upper cover (30) includes a top portion (31) and a second peripheral wall (32). The top portion (31) is mounted to the opening (29). The second peripheral wall (32) is connected with a peripheral edge of the top portion (31) and tightly combined with the fastening portion (23) to enable the first peripheral wall (22), the fastening portion (23), and the second peripheral wall (32) to jointly define an isolated space (40). In this way, the box (20) and the upper cover (30) can have preferable airtight effect therebetween.

## Description

### BACKGROUND OF THE INVENTION

### 1. Field of the Invention

The present invention relates generally to a culture container, and more particularly, to a plant culture box assembly.

### 2. Description of the Related Art

Taiwan Patent Publication No. M286577 disclosed a lidded culture container composed of a box and a lid. The box has a first external edge formed at a first opening thereof and being turnup and facing downward. The lid has a second external edge formed at a second opening thereof and expanding outwards and facing downwards. The first external edge is engaged with the second external edge tightly to combine the container and lid together and meanwhile, the first and second openings are sealed.

However, the first external edge is subject to deformation in the process of formation and production thereof or after it is used for a while because of the design of being turnup and facing downward, so a gap may become available between the first and second external edges to disable the first and second external edges from tight engagement with each other. In this way, external bacteria or other hazardous substances can easily enter the container through the gap to further contaminate the plant cultured in the container.

### SUMMARY OF THE INVENTION

The primary objective of the present invention is to provide a plant culture box assembly, which is structurally deformation-resistant and preferably airtight.

The foregoing objective of the present invention is attained by the plant culture box assembly composed of a box and an upper cover. The box includes a bottom portion, a first peripheral wall, and a fastening portion. The first peripheral wall is connected with a peripheral edge of the bottom portion in such a way that an opening is formed between the first peripheral wall and the bottom portion and opposite to the bottom portion. The fastening portion is annularly formed at an external side of the first peripheral wall. The upper cover includes a top portion and a second peripheral wall. The top portion is mounted to the opening. The second peripheral wall is connected with a peripheral edge of the top portion and combined with the fastening portion to enable the first peripheral wall, the fastening portion, and the second peripheral wall to jointly define an isolated space. In the meantime, the opening of the box is airtight to further enable the plant culture box assembly to be structurally not subject to deformation and to have preferable airtight effect.

In a preferred embodiment of the present invention, the fastening portion extends outwards transversally from the external side of the first peripheral wall. The second peripheral wall includes a convex edge engaged with a distal end of the fastening portion.

In a preferred embodiment of the present invention, the fastening portion includes a first part and a second part. The first part extends outwards transversally from the external side of the first peripheral wall. The second part extends upwards from a distal end of the first part. The second peripheral wall includes a convex edge engaged with an external side of the second part.

In a preferred embodiment of the present invention, the fastening portion includes a first part, a second part, and a cavity. The first part extends outwards transversally from the external side of the first peripheral wall. The second part extends outwards transversally from a distal end of the first part. The cavity is formed at a junction of the first and second parts. The second peripheral wall includes a convex edge engaged with the cavity.

In a preferred embodiment of the present invention, the top portion of the upper cover includes a pore and a guide portion extending downwards from a peripheral edge of the pore.

In a preferred embodiment of the present invention, the top portion of the upper cover includes a light-permeable section, which is arc-shaped in cross-sectional view, for equably scattering the light into the box.

### BRIEF DESCRIPTION OF THE DRAWINGS

FIG. 1 is a perspective view of a first preferred embodiment of the present invention.
FIG. 2 is a partially top view of the first preferred embodiment of the present invention.
FIG. 3 is a sectional view taken along a line 3-3 indicated in FIG. 2.
FIG. 4 is a partially top view of the first preferred embodiment of the present invention.
FIG. 5 is a sectional view taken along a line 5-5 indicated in FIG. 4.
FIG. 6 is a sectional view taken along a line 6-6 indicated in FIG. 4.
FIG. 7 is a sectional side view of the first preferred embodiment of the present invention.
FIG. 8 is an enlarged view of a part of the first preferred embodiment of the present invention.
FIG. 9 is similar to FIG. 8, illustrating that the spacer of the upper cover extends into the isolated space.

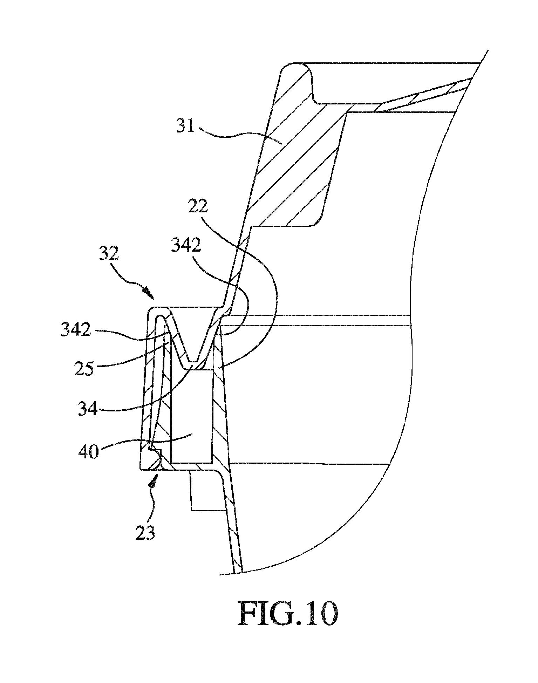

FIG. 10 is an enlarged view of a second preferred embodiment of the present invention.
FIG. 11 is an enlarged view of a third preferred embodiment of the present invention.
FIG. 12 is an enlarged view of a fourth preferred embodiment of the present invention.
FIG. 13 is an enlarged view of a fifth preferred embodiment of the present invention.

### DETAILED DESCRIPTION OF PREFERRED EMBODIMENTS

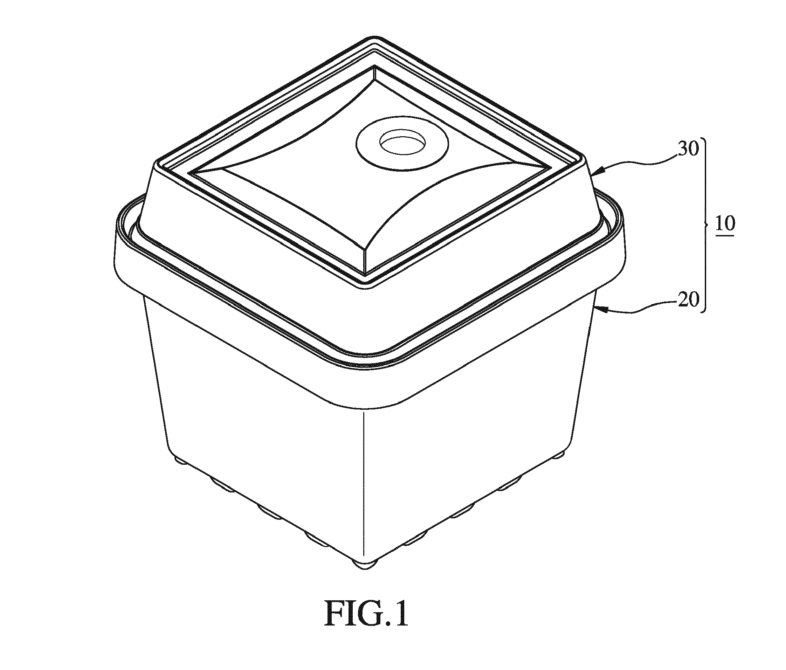

Referring to FIG. 1, a plant culture box assembly 10 constructed according to a firs preferred embodiment of the present invention is composed of a box 20 and an upper cover 30. The detailed descriptions and operations of these elements as well as their interrelations are recited in the respective paragraphs as follows.

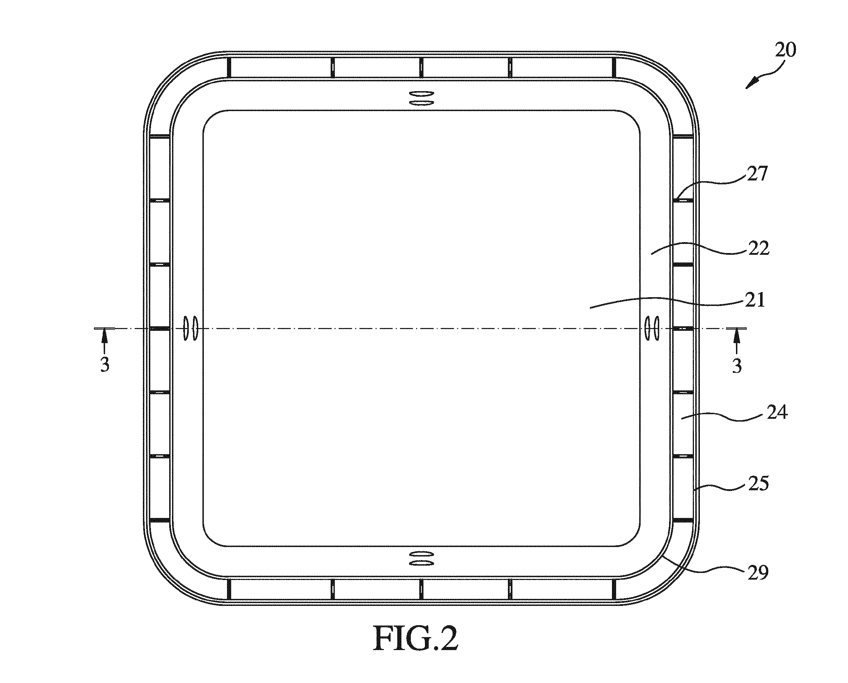

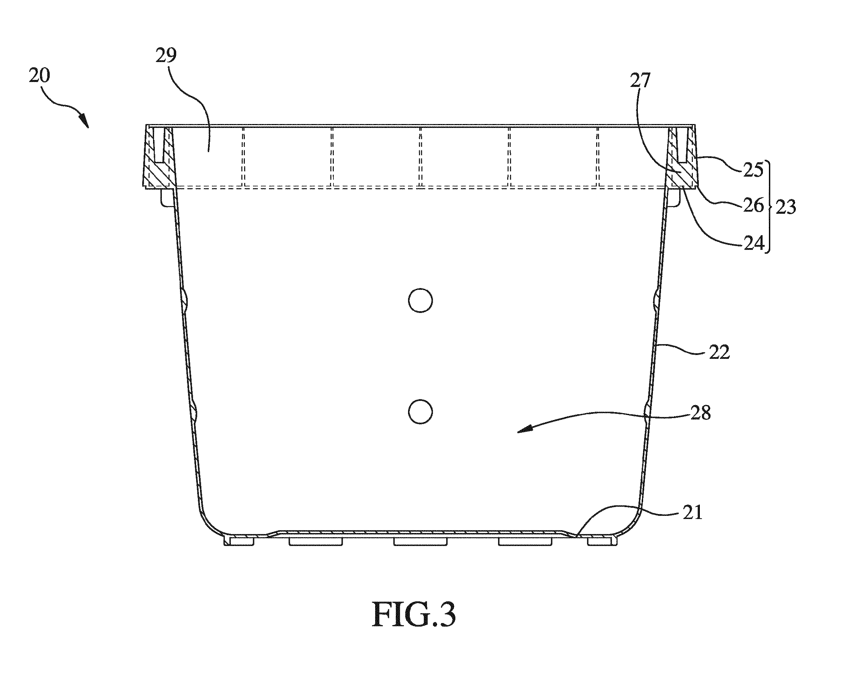

The box 20 includes a bottom portion 21, a first peripheral wall 22, and a fastening portion 23. As shown in FIGS. 2-3, the first peripheral wall 22 is connected with the bottom portion 21 to define a receiving space 28 therebetween for receiving a plant. An opening 29 is defined by the first peripheral wall 22 and the bottom portion 21 for communication with the receiving space 28 and opposite to the bottom portion 21. The fastening portion 23 includes a first part 24 extending outwards transversally from the external side of the first peripheral wall 22, a second part 25 extending upwards slantingways from a distal end of the first part 24, and a cavity 26 formed at a junction of the first and second parts 24 and 25. Besides, the box 20 includes a plurality of support portions 27 spaced from each another and located between the first peripheral wall 22 and the fastening portion 23. Each of the support portions 27 has a bottom end connected with the first part 24 and has two sides connected with the external side of the first peripheral wall 22 and the second part 25 of the fastening portion 23 for reinforcing the fastening portion 23 structurally.

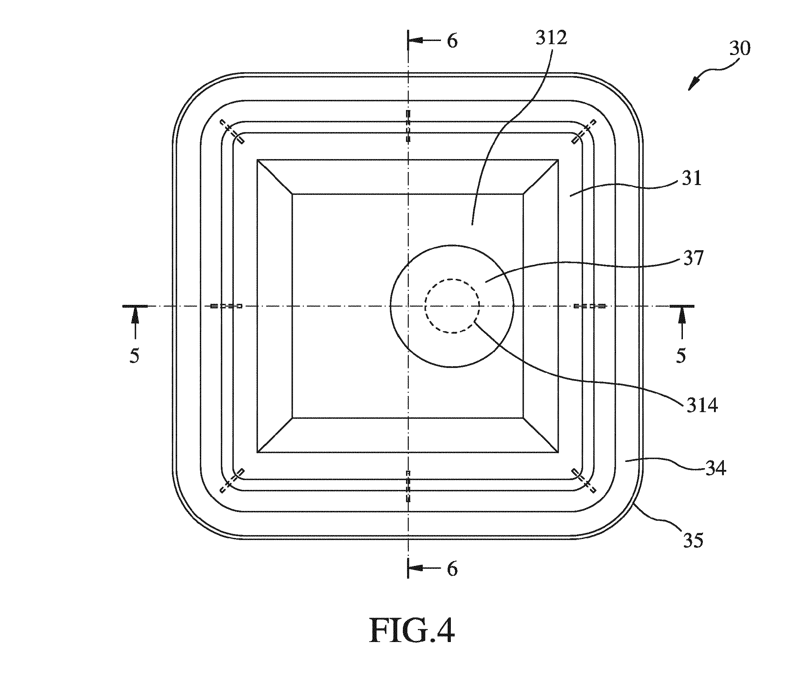

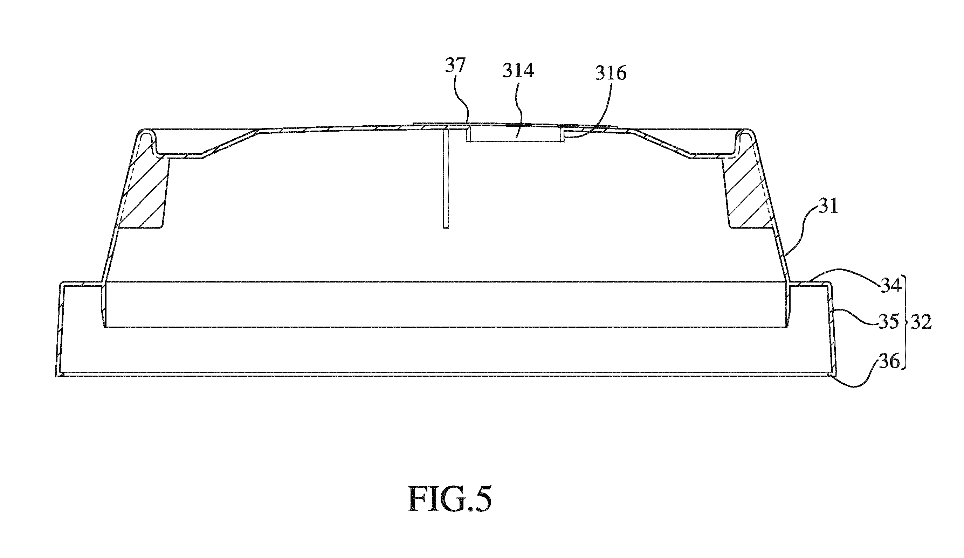

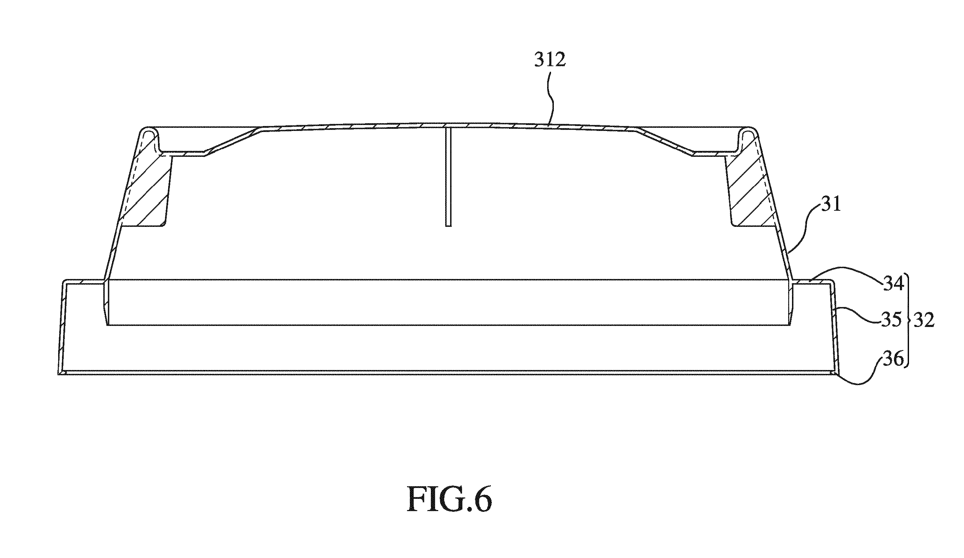

The upper cover 30 includes a top portion 31 and a second peripheral wall 32. The top portion 31 has a light-permeable section 312 and a pore 314 located at the light-permeable section 32, as shown in FIG. 4. The light-permeable section 312 is arc-shaped in cross-sectional view, as shown in FIG. 6. A guide portion 316 extends downwards from a peripheral edge of the pore 314, as shown in FIG. 5. The second peripheral wall 32 is formed annularly at a peripheral edge of the top portion 31 and has a third part 34, a fourth part 35, and a convex edge 36. The third part 34 is annularly formed at a bottom edge of the top portion 31 and extends outwards transversally from the bottom edge of the top portion 31. The fourth part 35 extends outwards slantingways from a distal end of the third part 34. The convex edge 36 protrudes inwards from a bottom end of the fourth part 35. The upper cover 30 includes a ventilative film 37 attached to the pore 314 for air exchange.

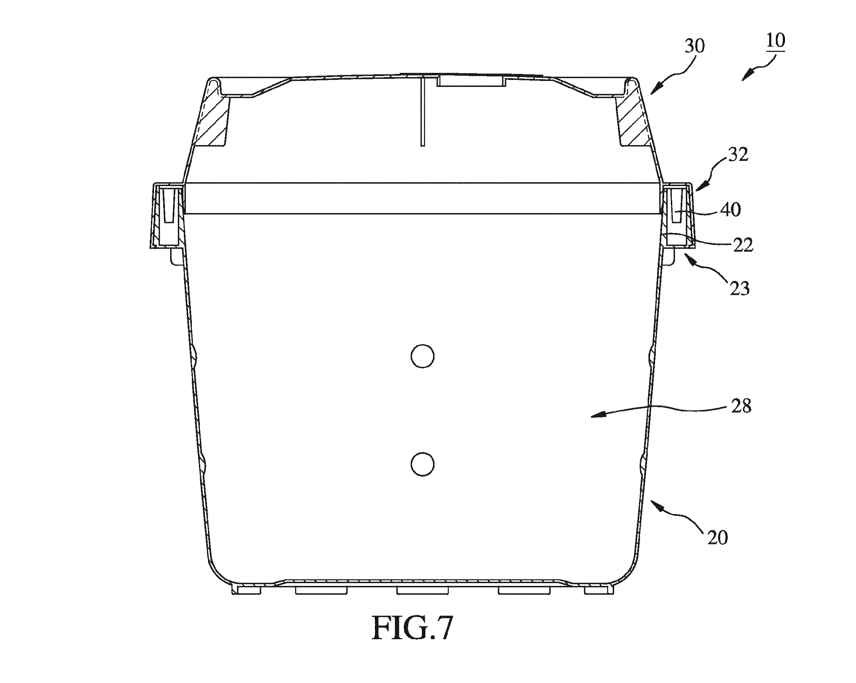

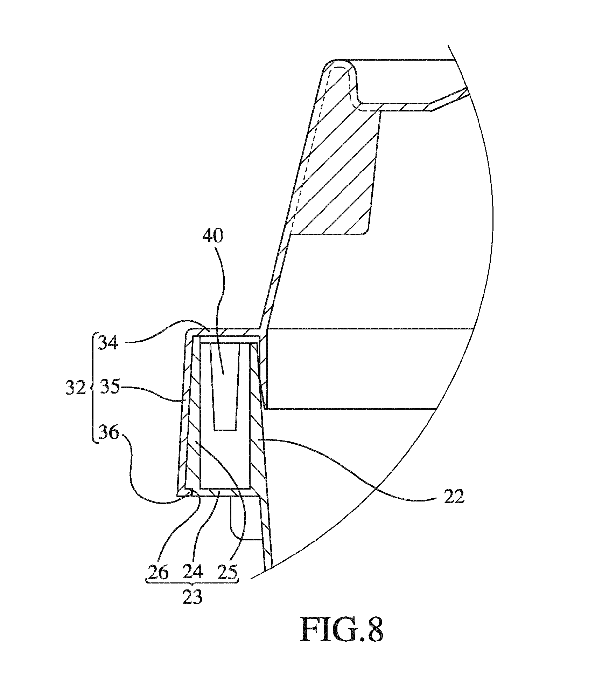

Referring to FIGS. 7-8, when it is intended to assemble the present invention, move the convex edge 36 of the second peripheral wall 32 of the upper cover 30 downwards along the fastening portion 23 to enable it to be engaged with the cavity 26 and then the top portion 31 is covered onto the opening 29 and an isolated space 40 is defined among the first peripheral wall 22, the fastening portion 23, and the second peripheral wall 32; meanwhile, the opening 29 becomes airtight, so the assembly is completed. After the assembly, the engagement between the convex edge 36 and the cavity 26 enables the upper cover 30 and the box 20 to be firmly combined together. Even if the plant culture box assembly 10 has been used for a long time, it will not be subject to deformation. Besides, each of the fourth part 35 and the second part 25 is identically taper-shaped, so they can cling to each other without any gap formed therebetween. In this way, preferable airtight effect is provided between the upper cover 30 and the box 20 to effectively prevent the external bacteria from entering the receiving space 28 to keep the receiving space 28 germfree. When the light is shone on the light-permeable section 312, the arc-shaped cross-section of the light-permeable section 312, as shown in FIG. 6, can scatter the light equably into the receiving space 28 to enable the plant inside the receiving space 28 to be equably shone. When the external air passes through the ventilative film 37 to enter the receiving space 28 through the pore 314, the guide portion 316 can allow the air inside the plant culture box assembly 10 to be securely guided and enhance convection

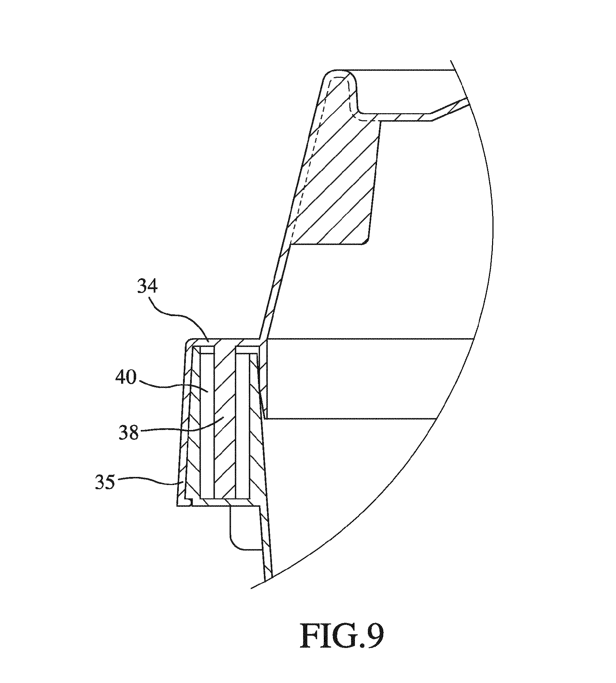

It is to be noted that the second peripheral wall 32 includes a spacer 38 extending downwards into the isolated space 40 from the third part 34, as shown in FIG. 9. Referring to FIG, 10, the third part 34 does not have to extend outwards transversally from the bottom edge of the top portion but alternatively extends into the isolated space 40 from the bottom edge of the top portion 31 and has two bevels 342. At least one of the bevels 342 can oppress the first peripheral wall 22 or the second part 25 to make the upper cover 30 and the box 20 more airtight and more fixed therebetween.

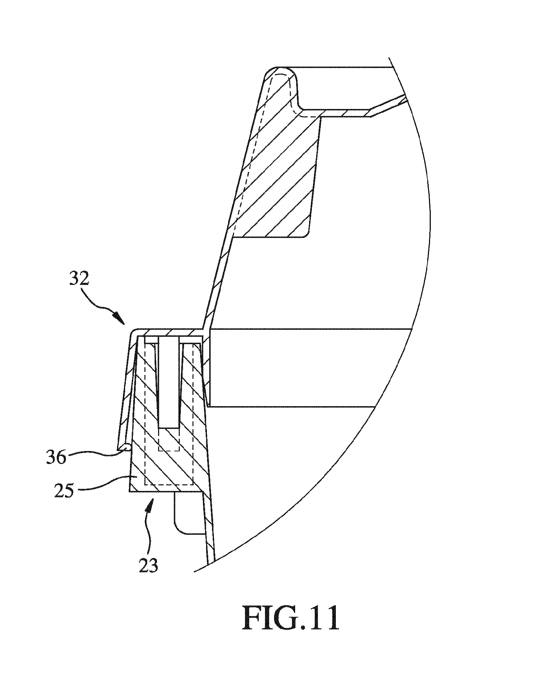

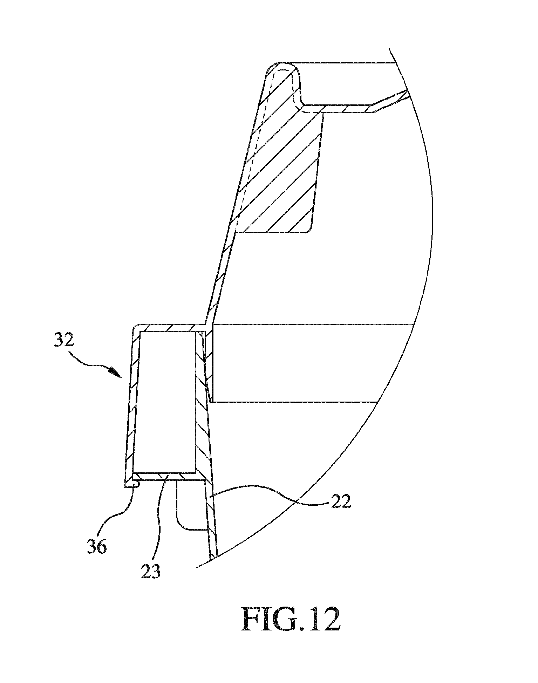

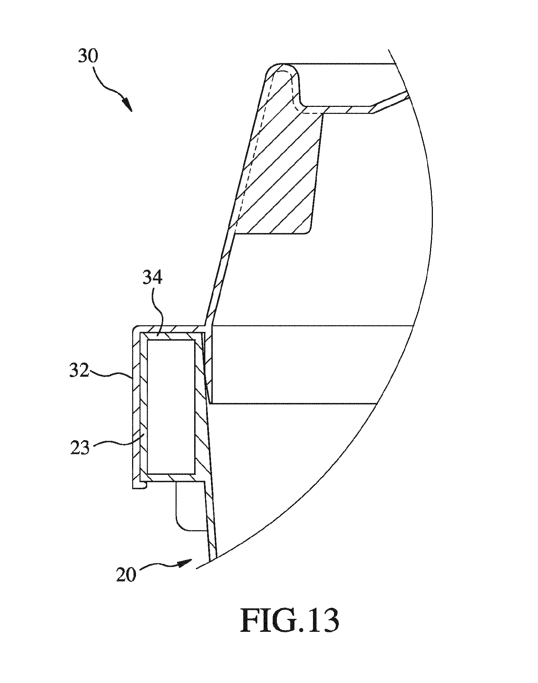

In addition, a variety of manners are provided for fixation between the fastening portion 23 and the second peripheral wall 32 as recited thereinafter. Referring to FIG. 11, the fastening portion 23 does not have the cavity 26, making the convex edge 36 contact against an external periphery of the second part 25. Referring to FIG. 12, the fastening portion 23 does have the second part 25, extending outwards transversally from the external side of the first peripheral wall 22, and the convex edge 36 is engaged with a distal end of the fastening portion 23. Referring to FIG. 13, the fastening portion 23 is a hollow rectangle in cross-section view; the second peripheral wall 32 can be combined with the fastening portion 23 and a top side of the fastening portion 23 can cling to the third part 34. No matter which manner indicated above is taken, the upper cover 30 and the box 20 can be firmly fixed to each other and keep effectively airtight therebetween.

Although the present invention has been described with respect to specific preferred embodiments thereof, it is in no way limited to the specifics of the illustrated structures but changes and modifications may be made within the scope of the appended claims.

## Claims

1. A plant culture box assembly (10) comprising:
a box (20) having a bottom portion (21), a first peripheral wall (22), and a fastening portion (23) extending outwards transversally from an external side of the first peripheral wall (22), the first peripheral wall (22) being connected with a peripheral edge of the bottom portion (21), whereby an opening (29) is formed between the first peripheral wall (22) and the bottom portion (21) and opposite to the bottom portion (21), the fastening portion (23) being annularly located at an external side of the first peripheral wall (22); and
an upper cover (30) having a top portion (31) and a second peripheral wall (32), the top portion (31) being covered onto the opening (29), the second peripheral wall (32) being connected with a peripheral edge of the top portion (31) and combined with the fastening portion (23), whereby an isolated space (40) is defined among the first peripheral wall (22), the fastening portion (23), and the second peripheral wall (32);
the plant culture box assembly being **characterized in that** the fastening portion (23) comprises a first part (24), a second part (25), and a cavity (26), the first part (24) extending outwards transversally from the external side of the first peripheral wall (22), the second part (25) extending upwards from a distal end of the first part (24), the cavity (26) being formed at a junction of the first part (24) and the second part (25);
the second peripheral wall (32) comprises a convex edge (36) engaged with the cavity (26); and
the box (20) comprises a plurality of support portions (27), which are spaced from each other and located between the first part (24) and the external side of the first peripheral wall (22) and the second part (25) for reinforcing the fastening portion (23) structurally.

2. The plant culture box assembly (10) as defined in claim 1, wherein the second peripheral wall (32) comprises a third part (34) and a fourth part (35), the third part (34) annularly located at a bottom edge of the top portion (31), the fourth part (35) extending downwards from the third part (34), the convex edge (36) protruding inwards from a bottom end of the fourth part (35).

3. The plant culture box assembly (10) as defined in claim 2, wherein the second part (25) of the fastening portion (23) extends upwards and inwards slantingways from a distal end of the first part (24); the fourth part (35) extends outwards and downwards slantingways from the third part (34).

4. The plant culture box assembly (10) as defined in claim 2, wherein the third part (34) extends into the isolated space (40) from the bottom edge of the top portion (31) and comprises at least one bevel (342) for oppressing one of the first peripheral wall (22) and the fastening portion (23).

5. The plant culture box assembly (10) as defined in claim 4, wherein the at least one bevel (342) is two in number for oppressing the first peripheral wall (22) and the fastening portion (23) respectively.

6. The plant culture box assembly (10) as defined in claim 1, wherein the top portion (31) comprises a pore (314) and a guide portion (316) extending downwards from a peripheral edge of the pore (314).
